# EUROPÄISCHE PATENTSCHRIFT

(11) **EP 1 379 758 B1**
(45) Veröffentlichungstag und Bekanntmachung des Hinweises auf die Patenterteilung: **08.11.2006**
(21) Anmeldenummer: 02759832.5
(22) Anmeldetag: 05.04.2002
(51) Int. Cl.: F01K 23/10

(54) **VERFAHREN ZUR BEREITSCHAFTSHALTUNG EINES KOMBIKRAFTWERKES**
METHOD FOR PLACING A COMBINED POWER PLANT ON STANDBY
PROCEDE DE MISE EN ATTENTE D'UNE CENTRALE ELECTRIQUE COMBINEE

(30) Priorität: 06.04.2001 DE 10117101; 06.04.2001 DE 10117102; 25.04.2001 CH 759012001
(43) Veröffentlichungstag der Anmeldung: 14.01.2004
(73) Patentinhaber: Alstom Technology Ltd, 5400 Baden (CH)
(72) Erfinder: LIEBIG, Erhard, 79725 Laufenburg (DE)
(86) Internationale Anmeldenummer: PCT/IB2002/001117
(87) Internationale Veröffentlichungsnummer: WO 2002/081870

(56) Entgegenhaltungen:
- EP-A- 0 768 449
- EP-A- 0 889 204
- US-A- 4 201 924
- US-A- 5 172 553

## Beschreibung

Die vorliegende Erfindung betrifft ein Verfahren zur Bereitschaftshaltung eines Kombikraftwerkes gemäss dem Oberbegriff des Anspruchs 1. Ein Solches Verfahren ist aus Dokument EP-A-0 889 204 bzw. Dokument EP-A-0 768 449 schon bekannt.

### STAND DER TECHNIK

In den liberalisierten Strommärkten gewinnt das dynamische Verhalten von Kraftwerken zunehmend an Bedeutung. Infolge der grossen Preisunterschiede für unterschiedliche Tages- und Jahreszeiten auf dem Strommarkt lohnt es sich deshalb immer weniger, ein Kraftwerk auch zu Zeiten niedriger Stromtarife zu betreiben. Entsprechend besteht ein Bedarf an geeigneten Möglichkeiten, um Kombikraftwerke zu Zeiten niedriger Stromtarife ausser Betrieb zu nehmen, und diese über Nacht, aber auch über Wochenenden, Feiertagsperioden, oder in Zeiten reichlich verfügbarer Wasserkraftresourcen, ausser Betrieb zu stellen, und über einen längeren Zeitraum in einem sicheren Bereitschaftsmodus zu halten, der dann auch ein schnelles Wiederanfahren erlaubt.

Nicht zuletzt die kapitalschonende "outdoor Bauweise" der Kombikraftwerke hat in diesem Zusammenhang die Konsequenz, dass für Stillstände Massnahmen zu treffen sind, um Stillstandschäden wie beispielsweise Frostschäden zu verhindern. Nach dem Stand der Technik werden beispielsweise den Medien von Zirkulationssystemen Frostschutzmittel zugegeben, was jedoch auch zu einem verschlechterten Wärmeübertragungsverhalten führt und damit die Systemauslegung negativ beeinflusst. Der Einsatz von Frostschutzmitteln scheidet jedoch bei Systemen mit hohen Reinheitsforderungen oder speziellen chemischen Fahrweisen beispielsweise den Wasser-/Dampf-Kreisiäufen grundsätzlich aus. Ferner sind solche wasserchemischen Massnahmen insbesondere bei teilweise offenen Systemen nicht wirtschaftlich. Der Einsatz von Chemikalien ist weiterhin aus Gründen des Umweltschutzes zunehmend umstritten. Deshalb werden für bestimmte Systeme direkte oder indirekte elektrische Beheizungen ggf. kombiniert mit entsprechenden Isolationen, Hilfspumpen oder spezielle Kleinkessel und dergleichen vorgesehen, um unter anderem das Absinken der Temperatur der Medien unter kritische Werte zu verhindern. Möglich ist natürlich auch die Entleerung bzw. Entwässerung der Zirkulationssysteme mit einer sich möglicherweise anschliessenden Austrocknung beispielsweise mittels Warmluft. Eine Öffnung von Systemen führt jedoch zu Lufteinbrüchen und folglich zwangsläufig zu Korrosion. Aus diesem Grund sind selbst Stillstandskonservierungen zur Verhinderung von Korrosion unter gewissen Bedingungen durchaus erforderlich. Diese Möglichkeiten werden aber, wenn überhaupt, nur bei ausgeprägt langen Stillstandzeiten oder in Kombination mit Wartungs- oder Instandhaltungsarbeiten in Betracht gezogen.

Beim Stillstand einer Kraftwerksanlage sind Dichtungssysteme oder die Luftabsaugung von im Unterdruckbereich arbeitenden Systemen und Komponenten wie Niederdruck-Dampfturbinen und Kondensatoren ausser Betrieb. Bei Systemen und Komponenten, welche ansonsten im Überdruckbereich arbeiten, wie Speisewasserbehälter/Entgaser und Dampftrommeln, kann sich infolge Abkühlung Umgebungsdruck oder sogar Unterdruck einstellen. Dies sind weitere kritische Bereiche hinsichtlich Korrosion durch Lufteinbruch.

Nachteilig an den Vorkehrungen nach dem Stand der Technik zur Stillstandhaltung von Kombikraftwerken ist unter anderem, dass für die Vielzahl der zu schützenden Systeme und Komponenten heutiger Kombikraftwerke auch eine Vielzahl von unterschiedlichen, meist teuren Massnahmen getroffen werden müssen. Diese dienen ferner ausschliesslich der Verhinderung von Schäden während des Stillstandes; sie sind für den Normalbetrieb der Anlage meist ohne Bedeutung, eventuell für diesen sogar nachteilig.

Wenn die Anlage Wiederangefahren werden soll, sollte die gesamte Anlagenleistung möglichst schnell zur Verfügung stehen. Während die Gasturbogruppe einer Kombianlage vergleichsweise schnell ans Netz gebracht und belastet werden kann, ist der nachgeschaltete Zweiphasenkreislauf, meist ein Wasser-Dampf-Kreislauf, vergleichsweise träge. Einerseits muss ein Frischdampf mit mindesterforderlichen Parametern vorliegen; andererseits weisen die Komponenten des Wasser-Dampf-Kreislaufes eine Vielzahl vergleichsweise dickwandiger Komponenten auf, die erst langsam auf Betriebstemperatur gebracht werden müssen. Der Stand der Technik in den verschiedensten weltweit installierten Kombikraftwerksanlagen kennt hierbei unterschiedliche Möglichkeiten, das sichere Anfahren des Zweiphasenkreislaufes sicherzustellen. Beispielsweise existieren Betriebskonzepte, bei denen Haltepunkte der Gasturbogruppe definiert sind, um den Zweiphasenkreislauf in kleinen Stufen aufzuwärmen. Derartige Verfahren können einerseits ungünstig für den Betrieb der Gasturbogruppe sein, und die gesamte Anlage kommt nur sehr langsam, im Extremfall erst nach Stunden, auf volle Leistung. Bekannt ist es auch, die Gasturbine vergleichweise schnell anzufahren, und erzeugten Dampf, der aufgrund ungenügender Dampfparameter und/oder noch nicht hinreichend vorgewärmter Dampfturbinenkomponenten nicht verwertbar ist, in einem Bypass zu verwerfen, und die Dampfturbine erst langsam in Betrieb zu nehmen. Auch hierbei kann eine lange Zeit vergehen, bis die Kombianlage auf ihrer vollen Leistung ist.

### DARSTELLUNG DER ERFINDUNG

Der Erfindung liegt die Aufgabe zugrunde, ein einfaches und kostengünstiges Verfahren zur Bereitschaftshaltung eines Kombikraftwerkes gemäss dem Oberbegriff des Anspruchs 1 anzugeben, welches die Nachteile des Standes der Technik ermöglicht, und insbesondere einen längeren Anlagenstillstand ohne den Betrieb des Kraftwerks negativ zu beeinflussende Massnahmen erlaubt, sowie ein schnelles Anfahren und Belasten auf Anlagenvollast.

Erreicht wird dies durch die Gesamtheit der Merkmale des Anspruchs 1.

Erfindungsgemäss ist also ein Kombikraftwerk zunächst auf an sich bekannte Weise mit einer Zusatzfeuerung im Abhitzedampferzeuger auszurüsten, und es ist ein Frischlüfter vorzusehen, der den Betrieb der Zusatzfeuerung auch im Stillstand des Kombikraftwerks erlaubt. Wiewohl diese Anordnung an sich zum Stand der Technik gehört, ist der Kern der Erfindung in der besonderen Betriebsweise der Zusatzfeuerung zu sehen. Die Zusatzfeuerung mitsamt dem Frischlüfter wird nämlich im Stillstand des Kraftwerks dauerhaft oder intermittierend betrieben, wobei der Betrieb der Zusatzfeuerung so geregelt wird, dass die Einstellung und/oder Einhaltung bestimmter Zustandsgrössen und Medienströme in dem im Wesentlichen aus Abhitzedampferzeuger und Dampfturbine bestehenden Zweiphasenkreislauf, meist handelt es sich um einen Wasser-Dampf-Kreislauf, des Kombikraftwerks gewährleistet wird. Dabei werden bevorzugt auch Förder- und/oder Speisepumpen des Zweiphasenkreislaufs dauerhaft oder intermittierend während des Stillstand des Kombikraftwerks betrieben, um die an sich nur im Abhitzekessel anfallende Wärme auch zu anderen Komponenten des Zweiphasenkreislaufs zu fördern.

In einer ersten Ausführungsform der Erfindung wird die Zusatzfeuerung im Stillstand der Kraftwerksanlage so betrieben, dass Zustände und Parameter der Kraftwerksanlage aufrechterhalten werden, welche für die Verhinderung von Stillstandschäden wesentlich sind. Wesentlich heisst in diesem Zusammenhang, dass diese Parameter bei Stillstand Werte annehmen können, welche zur Schädigung der Systeme und Komponenten führen (Frostschäden, Korrosion etc.). Diese Parameter beziehen sich dabei im wesentlichen auf den Zweiphasenkreislauf aber auch auf die Hilfs- und Nebenanlagen (Hauptkühlsystem, geschlossenes Kühlsystem usw.). Bei all diesen Anlagen, Systemen und Komponenten sind auch bei Stillstand Parameter sicherzustellen, welche Schädigungen mit Sicherheit verhindern.

Überraschenderweise kann diese Sicherungsfunktion von einer Zusatzfeuerung mit Frischlüfter in universeller Weise übernommen werden; es sind also nicht mehr eine Vielzahl verschiedener Massnahmen für verschiedene Systeme an einer Anlage notwendig, sondern mittels der einen oder auch mehreren Zusatzfeuerung mit Frischlüfter kann die sichere Stillstandhaltung von mehreren Systemen erfolgen. Der Frischlüfter ist dabei notwendig, da beim Stillstand der Gasturbinenanlage die Zusatzfeuerung ansonsten nicht betrieben werden kann. Die Zusatzfeuerung ist dabei im Gegensatz zu chemischen Methoden in Abhängigkeit von den konkreten Rahmenbedingungen, beispielsweise in Abhängigkeit von der Aussentemperatur, flexibel zu betreiben. Ausserdem ergibt sich mit einer Zusatzfeuerung der grosse Vorteil, dass diese nicht nur zur sicheren Stillstandhaltung sondern auch bei Betrieb der Anlage sinnvoll einsetzbar ist, wie zur Erzeugung von Zusatzleistung in Spitzenlastzeiten, was bei den herkömmlichen Massnahmen wie elektrischen Heizern und/oder chemischen Additiven nicht der Fall ist. Als besonders vorteilhaft erweist sich die Lösung natürlich bei der erwähnten "outdoor Bauweise", d.h. wenn die Hauptanlagen des Kraftwerkes wenigstens teilweise im Freien aufgestellt sind und hier der Frostschutz eine zentrale Aufgabe darstellt.

In einer weiteren Ausführungsform der Erfindung wird die Zusatzfeuerung im Stillstand der Kraftwerksanlage so betrieben, dass Zustände und Parameter der Kraftwerksanlage auf Werte gebracht und/oder gehalten werden, welche für das ungehinderte und schnelle Anfahren des Kombikraftwerkes wesentlich sind. Wesentlich heisst in diesem Zusammenhang, dass diese Parameter bei Stillstand ohne weitere Massnahmen Werte annehmen können, welche es nicht erlauben, das Kombikraftwerk schnell und haltepunktlos anzufahren, ohne dabei die Lebensdauer der Komponenten zu verringern oder ein instabiles Verhalten zu provozieren. Diese Parameter können sich dabei auf die Gasturbogruppe und/oder auf den Abhitzekessel und/oder auf den Zweiphasenkreislauf beziehen, da zum schnellen, zeitverzugslosen und haltepunktlosen Anfahren bestimmte Randbedingungen erfüllt sein müssen. Der Frischlüfter ist dabei notwendig, da ansonsten beim Stillstand der Gasturbogruppe die Zusatzfeuerung nicht betrieben werden kann.

In einer Betriebsweise des Verfahrens wird die Zusatzfeuerung betrieben, um die Temperatur des im Zweiphasenkreislauf des Kombikraftwerkes geführten Arbeitsmittels oberhalb des Gefrierpunktes zu halten.

Im Hinblick auf die Vermeidung bzw. die Verringerung von Korrosion insbesondere durch eindringende Luft kann die Zusatzfeuerung betrieben werden, um Zustände bzw. Parameter zu sichern, bei welchen Entleerungen und Entlüftungen geschlossen bleiben, und um Systeme zur Abdichtung und zur Luftabsaugung in Betrieb zu halten. Im Hinblick auf letzteren Aspekt wird die Zusatzfeuerung also betrieben, um eine zum Betrieb der Sperrdampf- und Sperrvakuumsysteme erforderliche Dampfmenge bereitzustellen.

In einer weiteren Ausführungsform der Erfindung wird die Zusatzfeuerung betrieben, um die Temperatur der im Zweiphasenkreislauf enthaltenen Medien, meist Wasser, so aufrechtzuerhalten, dass über den Dampfdruck ein Systemdruck aufrechterhalten wird, bei dem Entleerungen und/oder Entlüftungen nicht geöffnet werden und so Lufteinbrüche verhindert werden. Entwässerungen und Entlüftungen innerhalb der einzelnen Anlagen des Zweiphasenkreislaufes werden nach unterschiedlichen Kriterien geöffnet und geschlossen, d.h. Luft strömt im geöffneten Zustand in die Anlage, was erhöhte Korrosion nach sich zieht, resp. Gegenmassnahmen erforderlich macht. Dies gilt insbesondere für eine Abkühlung von Wasser-Dampfsystemen unter 100 °C, da sich ab dieser Temperatur im System Unterdruck einstellen kann und daher mit Lufteinbrüchen zu rechnen ist. Eine Möglichkeit, diesem entgegenzuwirken, stellt eine Stickstoffauflastung bei Drücken unterhalb von 1 bis 3 bar dar, oder eben ein erfindungsgemässer Betrieb der Zusatzfeuerung, um eine bestimmte Mindesttemperatur und damit einen mindesterforderlichen Druck aufrechtzuerhalten.

Das erfindungsgemässe Verfahren kann weiterhin vorteilhaft genutzt werden, um Kühlsysteme, insbesondere auch einen Kühlwasserzulauf, vor dem Einfrieren zu schützen. Ebenso kann die Zusatzfeuerung betrieben werden, um die Fliessfähigkeit von als Brennstoff eingesetzten Schwer- und Rohölen, und bei extrem niedrigen Aussentemperaturen von Dieselöl und Schmieröl oder auch Hydraulikflüssigkeit aufrechtzuerhalten.

Auf analoge Weise kann das erfindungsgemässe Verfahren gemäss einer weiteren bevorzugten Variante verwendet werden, um das Kraftwerk für einen schnellen Start und schnelle Belastung bereitzuhalten oder bereitzustellen. Dabei wird in einer ersten bevorzugten Variante die Zusatzfeuerung im Stillstand des Kraftwerks betrieben, um mittels einer Heizflüssigkeitsmenge und/oder einer Dampfmenge die Temperatur von Komponenten des Zweiphasenkreislaufs oberhalb einer vorgegebenen Mindesttemperatur einzustellen. Beispielsweise wird mit der Zusatzfeuerung die Temperatur von insbesondere dickwandigen Bauteilen des Abhitzekessels und/oder von Rohrleitungen und/oder von Rotoren und Gehäusen des Zweiphasenkreislaufs mittels Durch- und/oder Umströmung der Bauteile mit im Abhitzekessel erwärmter Flüssigkeit und/oder Dampf auf Werten gehalten, welche oberhalb der für das Anfahren kritischen Temperaturen liegen. Besonders günstig wird eine Mindesttemperatur des Frischdampfflansches der Dampfturbine oberhalb einer Mindesttemperatur eingestellt. Dies ermöglicht es, die Dampfturbine schnell zu belasten, ohne sonst erforderliche lange Haltezeiten.

Günstig ist es Weiterhin, vorgängig des Starts die Zusatzfeuerung derart zu betriebne, dass für den Betrieb der Dampfturbine geeignete Frischdampfzustände im Abhitzekessel möglichst schnell nach der Synchronisation der Gasturbogruppe erreicht werden.

In einer weiteren Ausführungsform wird mittels der Zusatzfeuerung die Temperatur vom Medium in Behältern des Zweiphasenkreislaufs oberhalb einer Mindesttemperatur gehalten. Dies dient einerseits der oben erwähnten Sicherung gegen Lufteinbruch, und andererseits wird so ein grosses Wärmepotential bereitgestellt, welches die Trägheit des Zweiphasenkreislaufs beim Anfahren deutlich vermindert.

Der Betrieb der Zusatzfeuerung kann auch genutzt werden, um die zur Bereitstellung und Bereithaltung einer entgasten Kondensatmenge, insbesondere Speisewassermenge, erforderliche Heizdampf- oder -flüssigkeitsmenge bereitzustellen.

Ebenso kann die Zusatzfeuerung verwendet werden, um eine Dampfmenge für den Betrieb eines Evakuierungsejektors eines Kondensators des Zweiphasenkreislaufs bereitzustellen, derart, dass bereits während des Stillstands oder des Startvorgangs der Gasturbogruppe des Kondensator evakuiert werden kann, um die Dampfturbine im Wesentlichen ohne Verzögerung zu starten.

Es ist bekannt, Gasturbogruppen mit Dampfkühlung auszuführen, wobei der Dampf möglichst frühzeitig zur Verfügung stehen muss. Ausserdem sind Verfahren bekannt, nach welchen für einen schonenden Anfahrvorgang bzw. zur Realisierung eines möglichst grossen Leistungsgradienten, oder zur Stickoxidreduktion, Dampf in die Gasturbogruppe eingespritzt wird. Vorteilhaft sowohl für die Dampfkühlung als auch für die Dampfeinspritzung ist, wenn Dampf möglichst frühzeitig zur Verfügung steht. Mittels einer Zusatzfeuerung kann in bezug auf den Anfahrvorgang der Gasturbogruppe Dampf zu beliebigen Zeitpunkten bereitgestellt werden. Auch Dampf für die Dampfturbine in einer verwertbaren Qualität, also mit für den Betrieb der Dampfturbine geeigneten Frischdampfparametern, sollte selbstverständlich für ein schnelles Belasten des gesamten Kombikraftwerks so früh wie möglich zur Verfügung stehen. Auch hier findet das erfindungsgemässe Verfahren mit Vorteil Anwendung.

Im Interesse eines schnellen und sicheren Anfahrens wird das erfindungsgemässe Verfahren mit Vorteil verwendet, um Schmieröl oder Flüssigbrennstoffe vorzuwärmen.

Gemäss einer weiteren Ausführungsform kann mit dem Frischlüfter das Spülen von Abhitzekessel und Kamin mit Frischluft vor und/oder während dem Anfahren der Anlage erfolgen. Vor dem Zünden einer Gasturbogruppe müssen normalerweise die nachgeschalteten Systeme unter Einhaltung bestimmter Parameter (Zeit, Geschwindigkeit, Massen- bzw. Volumenstrom) mit Luft gespült werden (Purging), um möglicherweise vorhandene brennbare Substanzen auszublasen. Dazu muss die Gasturbogruppe nach dem Stand der Technik über eine bestimmte Zeit mit einer bestimmten Drehzahl gedreht werden, was mittels des Anfahrumrichters und einem Betrieb des Generators als Motor erfolgt. Für das Spülen kann gemäss einem Aspekt der Erfindung der Frischlüfter wirkungsvoll eingesetzt werden, während parallel andere Schritte der Startvorbereitung ausgeführt werden können, wodurch insgesamt die Startzeiten weiter verkürzt werden.

### KURZE ERLÄUTERUNG DER FIGUREN

Die Erfindung soll nachfolgend anhand eines in der Zeichnung dargestellten Ausführungsbeispiels, welches die Erfindung illustrieren, deren Anwendung aber nicht einschränken soll, näher erläutert werden. In den fünf Figuren ist immer dieselbe Kraftwerksanlage gezeigt, wobei im Interesse der besseren Übersichtlichkeit unterschiedliche im Zusammenhang mit der Erfindung relevante Systeme in unterschiedlichen Figuren dargestellt sind. Im einzelnen zeigen
- Fig. 1: ein generelles Schema eines Kombikraftwerkes mit Zusatzfeuerung und Frischlüfter;
- Fig. 2: ein Schema nach Fig. 1 mit eingezeichneten Dampfeinspritzungsleitungen;
- Fig. 3: ein Schema nach Fig. 1 mit eingezeichneten Leitungen für ein geschlossenes dampfkühlsystem;
- Fig. 4: ein Schema nach Fig. 1 mit eingezeichneter Brennstoffvorwärmung, Sperrdampfsystem, und Evakuierungssystem; sowie
- Fig. 5: ein Schema nach Fig. 1 mit eingezeichneten Medienströmen zur Warmhaltung dickwandiger Bauteile und zur Bereitstellung und Bereithaltung von entgastem Speisewasser.

### WEGE ZUR AUSFÜHRUNG DER ERFINDUNG

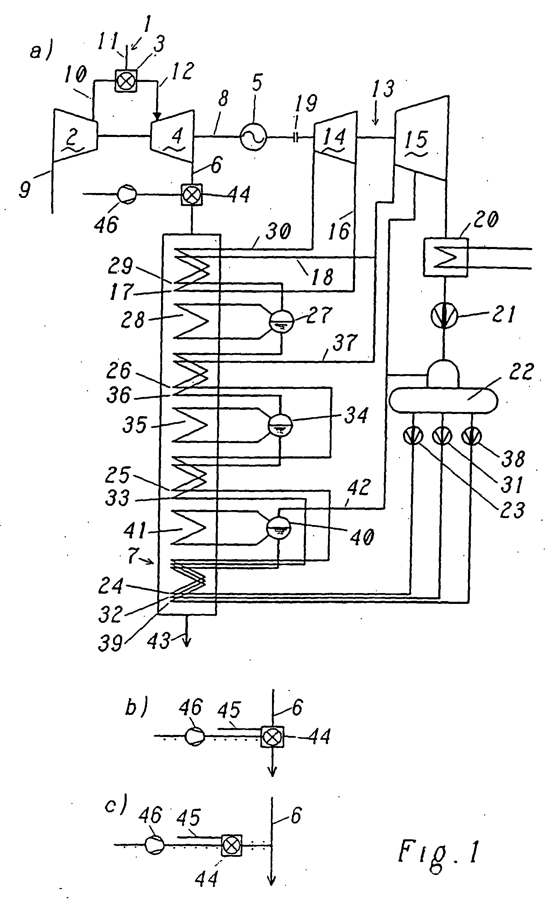

Figur 1 a) zeigt eine schematische Darstellung eines Kombikraftwerkes wobei eine Gasturbogruppe 1 und eine Dampfturbine 13 auf einen gemeinsamen Generator 5 wirken.. Der Zweiphasenkreislauf, beispielsweise ein Wasser-Dampf-Kreislauf, mit Abhitzekessel 7 und Dampfturbinenanlage 13 ist beispielhaft als Dreidruckprozess mit Zwischenüberhitzung 17 ausgeführt.

Das Kombikraftwerk weist gemäss der Figur 1 a) eine Gasturbogruppe 1 auf, deren Abgas 6 einem Abhitzekessel 7 zugeführt wird. Die Gasturbogruppe 1 besteht aus einem Verdichter 2, einer Brennkammer 3 und einer Turbine 4. Die Turbine 4, der Verdichter 2 und der Generator 5 sind auf einer gemeinsamen Welle 8 angeordnet. Die Turbine 4 treibt über diese gemeinsame Welle 8 sowohl den Verdichter 2 als auch den Generator 5 an. Die über eine Ansaugluftleitung 9 dem Verdichter 2 zugeführte Luft gelangt nach der Verdichtung im Verdichter 2 als Verbrennungsluft 10 in die Brennkammer 3. In der Brennkammer 3 wird über die Brennstoffleitung 11 zugeführter Brennstoff verbrannt. Das in der Brennkammer 3 erzeugte Heissgas 12 gelangt zur Turbine 4 und wird dort arbeitleistend entspannt.

Eine Gasturbogruppe kann auch mehrere Brennkammern und mehrere Turbinen aufweisen. So ist beispielsweise bei Gasturbogruppen mit sequentieller Verbrennung einer Hochdruckbrennkammer mit Hochdruckturbine eine Niederdruckbrennkammer mit Niederdruckturbine nachgeschaltet. Auch kann eine Gasturbogruppe mehrere Verdichter aufweisen, zwischen denen Zwischenkühler angeordnet sind.

Der im Abhitzekessel 7 in mehreren Druckstufen erzeugte Dampf wird über die jeweiligen Frischdampfleitungen 30,37,42 einer Dampfturbine 13 zugeführt. Der Hochdruckdampf wird nach der Teilentspannung in der Hochdruckturbine 14 der Dampfturbine 13 über die kalte Zwischenüberhitzerdampfleitung 16 dem Zwischenüberhitzer 17 des Abhitzekessels 7 zugeführt, dort überhitzt und über die heisse Zwischenüberhitzerdampfleitung 18 gemeinsam mit dem Mitteldruckdampf der Mitteldruck-/Niederdruckdampfturbine 15 der Dampfturbinenanlage 13 zugeführt.

Diese Dampfturbine 13 besteht aus einer Hochdruckturbine 14 und einer Mitteldruck-/Niederdruckturbine 15. Im vorliegenden Fall treibt die Dampfturbine 13 über eine Kupplung 19 ebenfalls den Generator 5 an. Selbstverständlich können die Gasturbogruppe 1 und die Dampfturbine 13 jeweils über einen eigenen Generator verfügen. In diesem Fall können auch mehr als ein Gasturbosatz mit zugehörigem Abhitzekessel mit beispielsweise einer Dampfturbine kombiniert sein.

Der in der Dampfturbine 13 abgearbeitete Dampf strömt in einen Kondensator 20. Nach der Kondensation des Abdampfes im Kondensator 20 wird das Kondensat von der Kondensatpumpe 21 zum Speisewasserbehälter/Entgaser 22 gefördert, dort entgast und gespeichert.

Vom Speisewasserbehälter/Entgaser 22 wird mittels der Hochdruckspeisepumpe 23 Speisewasser zu einem ersten Hochdruckeconomizer 24 gefördert, strömt danach zum zweiten Hochdruckeconomizer 25, zum dritten Hochdruckeconomizer 26 und von diesem zur Hochdruckdampftrommel 27. Die Hochdruckdampftrommel 27 steht mit dem Hochdruckverdampfer 28 in Verbindung. Weiter folgt der Hochdruckdampftrommel 27 ein Hochdrucküberhitzer 29, an welchem die Hochdruck-Frischdampfleitung 30 anschliesst, die zur Hochdruckturbine 14 der Dampfturbine 13 führt.

Vom Speisewasserbehälter/Entgaser 22 wird mittels der Mitteldruckspeisewasserpumpe 31 Speisewasser zu einem ersten Mitteldruckeconomizer 32 gefördert, strömt danach zum zweiten Mitteldruckeconomizer 33 und von diesem zur Mitteldruckdampftrommel 34. Die Mitteldruckdampftrommel 34 steht mit dem Mitteldruckverdampfer 35 in Verbindung. Weiter folgt der Mitteldruckdampftrommel 34 ein Mitteldrucküberhitzer 36, an welchem die Mitteldruck-Frischdampfleitung 37 anschliesst, die zur Mitteldruck-/Niederdruckturbine 15 der Dampfturbine 13 führt.

Vom Speisewasserbehälter/Entgaser 22 wird mittels der Niederdruckspeisepumpe 38 Speisewasser zu einem Niederdruckeconomizer 39 gefördert und strömt von diesem zur Niederdruckdampftrommel 40. Die Niederdruckdampftrommel 40 steht mit dem Niederdruckverdampfer 41 in Verbindung. An der Niederdruckdampftrommel 40 schliesst die Niederdruckfrischdampfleitung 42 an, die ebenfalls zur Dampfturbine 13 führt. Der Niederdruckdampf dient ebenfalls zur Entgasung des Kondensates im Speisewasserbehälter/Entgaser 22.

Im vorliegenden Fall wurde ein Abhitzekessel bestehend aus Trommel-Umlaufverdampfern beschrieben. Dem Fachmann sind ohne Weiteres aber auch Durchlaufverdampfer, auch "Once-Through"-Verdampfer genannt, geläufig.

Die Figuren 1 b) und 1 c) zeigen zwei mögliche Realisierungen der Zusatzfeuerung 44 mit Frischlüfter 46. Im in Figur 1 b) dargestellten Fall befindet sich die Zusatzfeuerung 44 analog zur Figur 1 a) unmittelbar in der Abgasleitung 6 zwischen Gasturbine 4 und Abhitzekessel 7 mit der entsprechenden Brennstoffleitung 45.

Die Zusatzfeuerung 44 kann auch ausserhalb des eigentlichen Abgaspfades der Gasturbogruppe angeordnet sein, wie dies in Figur 1 c) dargestellt ist. Die vom Frischlüfter 46 geförderte Luft bzw. das Rauchgas der Zusatzfeuerung 44 kann dem Abgas 6 der Gasturbogruppe entweder vor dem Eintritt in den Abhitzekessel 7 aber auch an beliebiger Stelle innerhalb des Abhitzekessels 7 zugemischt werden. In diesem Fall ist der Betrieb des Frischlüfters 46 zum Betreiben der Zusatzfeuerung 44 auch bei in Betrieb befindlicher Gasturbogruppe 1 erforderlich. Alternativ oder zusätzlich kann eine Zusatzfeuerung auch innerhalb des Abhitzekessels 7 angeordnet sein, vorzugsweise in Strömungsrichtung des Abgases 6 vor Wärmetauschflächen einer Druckstufe. Dabei kann der Frischlüfter drückend die Luft entweder direkt zur Zusatzfeuerung fördern oder stromauf der Zusatzfeuerung or der Zusatzfeuerung, z.B. auc Frischluft in den Abgaspfad fördern. Der Frischlüfter kann aber auch saugend, stromab vom Abhitzekessel 7, angeordnet sein. Ein saugender Frischlüfter kann bei in Betrieb befindlicher Gasturbogruppe 1 auch als Booster eingesetzt werden.

Der Aufbau des beschriebenen Zweiphasenkreislaufes, des Abhitzekessels 7, der Gasturbogruppe 1 und der Dampfturbine 13 ist lediglich als ein Beispiel zu betrachten, da wie allgemein bekannt ist, derartige Komponenten bzw. Systeme sehr unterschiedlich ausgebildet sein können.

Bei Stillständen dieser Systeme insbesondere von längerer Zeitdauer ist die geeignete Bereitschaftshaltung von Interesse. Bei Stillständen von beispielsweise mehreren Tagen, wie über Wochenenden oder Feiertagsperioden, ist einerseits eine konservierende Bereitschaftshaltung gefragt, in dem Sinne, dass beispielsweise Korrosions- oder auch Frostschäden in den Komponenten des Zweiphasenkreislaufs, insbesondere in Wasser-Dampf-Kreisläufen, zu vermeiden sind. Eine weitere sich stellende Aufgabe ist, eine Möglichkeit vorzusehen, insbesondere den komplexen und thermisch trägen Zweiphasenkreislauf in einen Zustand zu versetzen oder in einem Zustand zu halten, der ein schnelles Anfahren und Belasten des gesamten Kraftwerkes erlaubt.

Beide Aufgaben können nach eingehender Analyse dahingehend zusammengefasst werden, dass bestimmte Zustände und Medien- und Enthalpieströme im Zweiphasenkreislauf herzustellen und aufrechtzuerhalten sind.

In den weiteren Figuren ist das in Figur 1 dargestellte Kombikraftwerk mit Betonung verschiedener Nebensysteme, welche für die erfindungsgemässe Bereitschaftshaltung von Bedeutung sind, dargestellt; anhand dieser Figuren wird die Erfindung nachfolgend im Einzelnen näher erläutert. Alle diese Figuren stellen das selbe Kombikraftwerk dar, wobei die unterschiedlichen Nebensysteme im Sinne einer besseren Übersichtlichkeit des komplexen Gesamtsystems in getrennten Figuren dargestellt sind. Selbstverständlich können und sollen die einzelnen Verfahrensschritte in Kombikraftwerken, in denen die jeweiligen Systeme vorhanden sind, miteinander kombiniert werden.

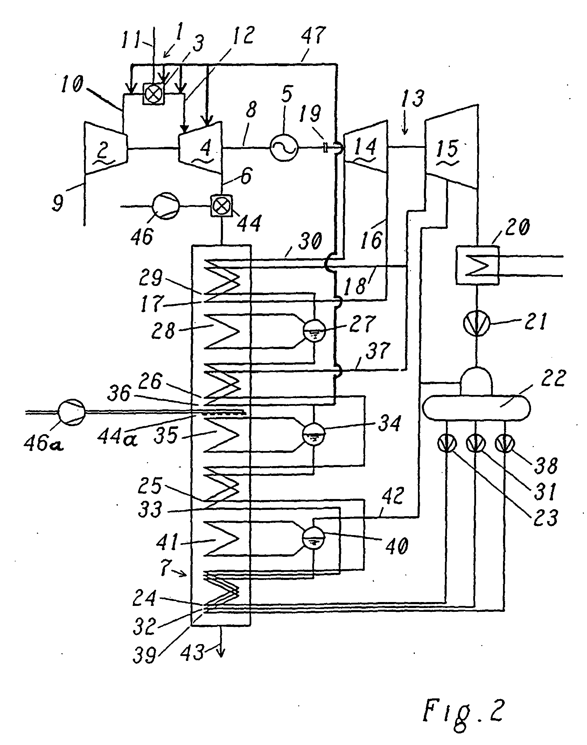

Gasturbogruppen, bei denen Dampf in das Arbeitsgas eingebracht wird, sind aus dem Stand der Technik bekannt. dabei kann dieser Dampf auch vorgängig in einem offenen Kühlsystem der Gasturbogruppe Verwendung finden. Einerseits bei der Kühlung, aber auch zur Schaffung eines grossen Leistungsgradienten, soll der verwendete Dampf möglichst schon ab dem Start der Gasturbogruppe zur Verfügung stehen. Figur 2 zeigt die Verwendung einer Zusatzfeuerung 44a mit Frischluftgebläse 46a im Abhitzekessel 7 zur Bereitstellung von Dampf bereits während des Stillstandes der Gasturbogruppe 1. Die unmittelbar in Strömungsrichtung vor dem Mitteldruckverdampfer 35 angeordnete Zusatzfeuerung 44a erwärmt bzw. verdampft das Arbeitsmittel im Mitteldruckdampfsystem. Der Frischlüfter kann dabei entweder die Luft in Strömungsrichtung des Abgases 6 vor dem Abhitzekessel 7 oder innerhalb des Abhitzekessels 7 vor der Zusatzfeuerung 44a einblasen, kann aber auch wie hier angegeben die Luft direkt zur Zusatzfeuerung 44a fördern. Bei der Verwendung von mehreren Zusatzfeuerungen 44, 44a ist es auch möglich, einen einzigen Frischlüfter für alle Zusatzfeuerungen vorzusehen. Nach der Mitteldruckdampftrommel 34 wird eine Dampfleitung für die Dampfeinspritzung 47 in die Gasturbogruppe 1 abgezweigt, mittels welcher die Dampfeinspritzung in die Verbrennungsluft 10, die Brennkammer 3, das Heissgas 12 und die Gasturbine 4 erfolgen kann. Da im Falle einer Dampfeindüsung der Dampf in das Arbeitsmittel der Gasturbogruppe 1 einzubringen ist, sind zunächst die entsprechenden Druckbedingungen zu beachten. Aus Wirkungsgradgründen ist es ferner zweckmässig eine möglichst hohe Dampftemperatur zu realisieren. Der Abhitzekessel 7 und die Zusatzfeuerung sollten daher so ausgelegt sein und während des Stillstandes der Anlage derart betrieben werden können, dass sich Dampf mit einem Druck von 20 bis 50 bar, insbesondere bevorzugt von 30 bis 40 bar, und mit einer Temperatur im Bereich von 300 bis 600 °C, insbesondere bevorzugt im Bereich von 450 bis 540 °C, erzeugen lässt; daher ist im vorliegenden Falle eine innerhalb des Kessels 7 angeordnete und unmittelbar auf den entsprechenden Verdampfer 35 oder Überhitzer wirkende Zusatzfeuerung 44a mit Frischlüfter 46a zu bevorzugen. Erfindungsgemäss wird bei der gegebenen Konfiguration die Zusatzfeuerung 44a und gegebenenfalls die Mitteldruck-Speisepumpe 31 während des Stillstandes des Kombikraftwerks betrieben, um eine Dampfmenge mit den entsprechenden Zuständen bereitzustellen.

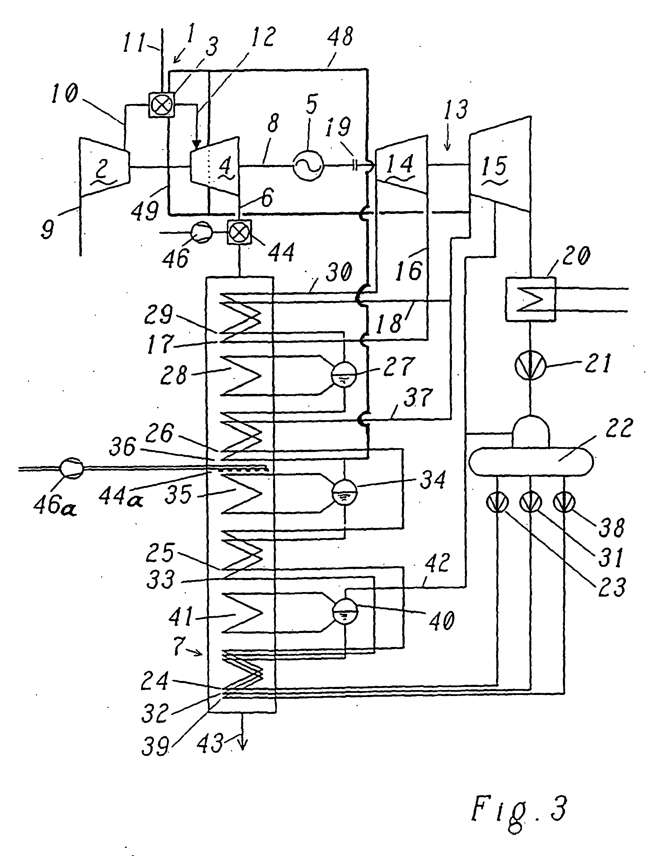

Figur 3 illustriert die Anwendung des erfindungsgemässen Verfahrens zur Bereitstellung des Dampfes für ein geschlossenes Dampfkühlsystem der Gasturbogruppe 1, wie sie beispielsweise aus der EP 062 932 bekannt ist. Nach dem Durchströmen der Gasturbogruppe 1 wird der Dampf über eine Dampfleitung 49 der Mitteldruck-/Niederdruckdampfturbine 15 zugeführt. Die Temperaturen des Dampfes beim Eintritt in die Gasturbogruppe 1 liegen hierbei vorzugsweise im Bereich von 250 bis 450 °C insbesondere bei ca. 300 bis 400 °C. Nach dem Durchströmen der Gasturbogruppe 1 sollte sich der Dampf ohne weitere Wassereinspritzung energetisch nutzen lassen. Die Dampftemperaturen am Austritt der Gasturbogruppe 1 sollten daher 600 °C nicht übersteigen und bevorzugt im Bereich von 520 bis 580 °C liegen. In Dampfkühlsystemen herrschen typischerweise Drücke von 20 bis 50 bar. Der Abhitzekessel 7 und die Zusatzfeuerung 44 sollten daher so ausgelegt sein und während des Stillstandes der Anlage bevorzugt derart betrieben werden, dass sich Dampf mit einem Druck von 20 bis 50 bar, insbesondere von 30 bis 40 bar, und mit einer Temperatur im Bereich von 250 bis 450 °C, insbesondere im Bereich von 300 bis 400 °C, erzeugt wird.

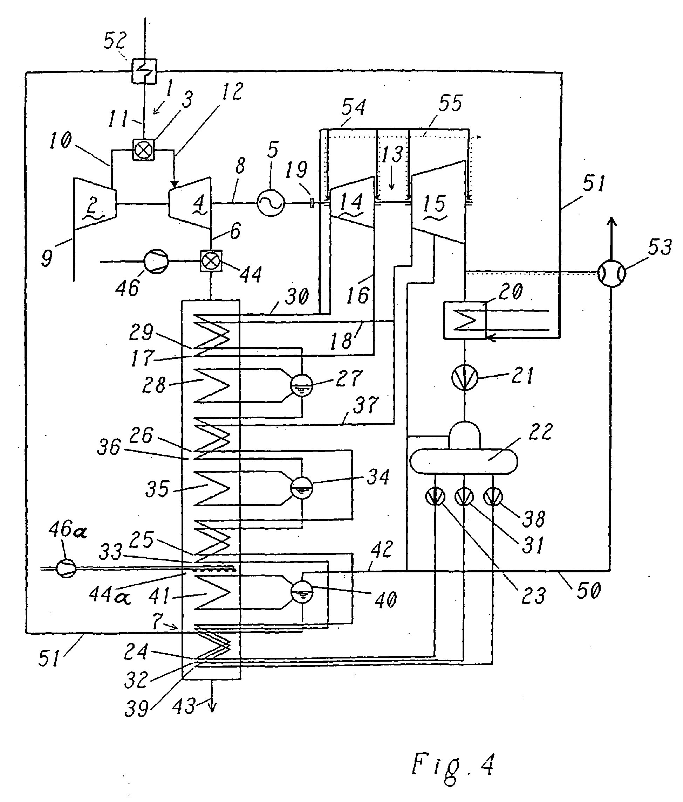

In Figur 4 sind ein Sperrdampfsystem 54 der Dampfturbine dargestellt, sowie ein Evakuierungsejektor 53 mit der zugehörigen Dampfleitung 50, und ein Brennstoffvorwärmer 52, der über eine Heizdampf- oder Flüssigkeitsleitung 51 mit Heizmedium beschickt wird. Über das Sperrdampfsystem 54 gelangt im Betrieb Dampf zu den Wellendichtungen der Dampfturbine 13, und verhindert so das Eindringen von Luft an den Niederdruck-Wellendichtungen und den exzessiven Dampfaustritt an den Hochdruck-Wellendichtungen. Das Eindringen von Luft zu verhindern ist auch im Stillstand wünschenswert, um insbesondere Korrosionsschäden zu vermeiden. Bei der dargestellten Anlage werden erfindungsgemäss die Hochdruckspeisepumpe 23 und die Zusatzfeuerung 44 wenigstens intermittierend betrieben, um eine ausreichende Sperrdampfmenge für das Sperrdampfsystem zur Verfügung zu stellen. Bevorzugt wird dabei ein Sperrdampf mit einem Druck von mehr als 2 bar, insbesondere mehr als 4 bar, bereitgestellt. Damit kann ein möglicher Lufteinbruch zumindest an den Wellendichtungen verhindert werden. Durch den Betrieb der stromauf des Abhitzekessels angeordneten Zusatzfeuerung 44 werden selbstverständlich alle Heizflächen 17, 24, 25, 26, 28, 29, 32, 33, 35, 36, 39, 41 innerhalb des Abhitzekessels 7 beeinflusst, und das darin enthaltene Medium erwärmt. Durch den intermittierenden oder kontinuierlichen Betrieb der Speisepumpen 23, 31, 38, sowie der Kondensatpumpe 21 im Stillstand des Kombikraftwerks wird die im Kessel 7 dem Medium zugeführte Wärme im gesamten Zweiphasenkreislauf verteilt. Der Betrieb der Zusatzfeuerung 44 und der Pumpen wird dabei so geregelt, dass eine bestimmte Temperaturen an unterschiedlichen Stellen des Zweiphasenkreislaufs nicht unterschritten werden, so, dass beispielsweise ein Einfrieren des Mediums, insbesondere von Wasser, in den Leitungen auch bei langem Stillstand und extremen Umgebungstemperaturen vermieden wird. Alternativ werden Zusatzfeuerung und Pumpen so betrieben, dass ein ausreichender Druck erhalten bleibt, um das Öffnen von Entleerungen und/oder Entlüftungen zu vermeiden, und so Lufteinbrüche weiterhin zu vermeiden. Für den Fachmann ist die Kopplung beider Regelungen in einer Weise, dass beide Bedingungen erfüllt bleiben, offensichtlich. Die Zusatzfeuerung und die Speise- und Förderpumpen werden dann so betrieben, dass Zustände und Medienströme aufrechterhalten werden, die geeignet sind, Stillstandsschäden, insbesondere durch Korrosion und Frost, zu vermeiden, ohne weitere aufwändige und häufig für den Normalbetrieb störende Massnahmen wie das Hinzufügen von Korrosions- und Frostschutzchemikalien ergreifen zu müssen. Der Ejektor 53 dient dazu, beim Anfahren des Zweiphasenkreislaufs den stromab der Niederdruck-Dampfturbine 15 gelegenen Teil des Zweiphasenkreislaufs, insbesondere den Kondensator 20, zu evakuieren. Dazu wird eine Treibdampfmenge 50 durch den Ejektor geleitet. Beim Anfahren des Kombikraftwerks ergibt sich eine Verzögerung daraus, dass zunächst der zum Evakuieren des Kondensators 20 notwendige Dampf bereitgestellt werden muss, und dann ein Volumen zu evakuieren ist; erst danach kann die Dampfturbine 13 angefahren und belastet werden. Im Normalfall erfordert dies auch einen längeren Haltepunkt der Gasturbogruppe 1 auf vergleichsweise niedriger Leistung. Erfindungsgemäss kann durch den Betrieb einer Zusatzfeuerung 44 oder 44a mit Frischlüfter 46, 46a schon vor dem Anfahren der Anlage eine Dampfmenge zur Evakuierung des Kondensators bereitgestellt oder bereitgehalten werden. So kann der Kondensator im Stillstand des Kombikraftwerks evakuiert werden, was gegebenenfalls in einer erheblichen Reduktion der Anfahr- und Belastungszeit resultiert. Im dargestellten Fall erfordert weiterhin ein Brennstoffvorwärmer 52 Heizdampf oder -flüssigkeit 51. Während dies beim Betrieb der Gasturbogruppe mit Brenngas in der Startphase von untergeordneter Bedeutung ist, ist die Brennstoffvorwärmung bei der Verbrennung von Schweröl oder von Dieselöl bei extremen Aussentemperaturen zur Herstellung und Aufrechterhaltung der Fliessfähigkeit des Brennstoffs betriebsnotwendig. Erfindungsgemäss wird eine Zusatzfeuerung im Stillstand des Kombikraftwerks betrieben, um das entsprechende Heizmedium bereitzustellen, und somit eine Startbereitschaft zu gewährleisten. Für den Ejektor und die Brennstoffvorwärmung wird üblicherweise Wasser oder Dampf mit niedrigem Druck und Temperatur benötigt, weshalb beide am stromabwärtigen "kalten" Ende des Abhitzekessels 7 entnommen werden. Die Bereitstellung dieser Medien kann einerseits über die Zusatzfeuerung 44 erfolgen, welche aber auch auf alle stromauf gelegenen Heizflächen und daher nur sehr indirekt wirkt. Direkter und daher besser regelbar wirkt eine weiter stromab im Abhitzekessel 7 angeordnete Zusatzfeuerung 44a mit einem Frischlüfter 46a. Dabei werden die Zusatzfeuerung und die Pumpen bevorzugt so betrieben, dass der Druck des Treibdampfes 50 wenigstens 6 bar, insbesondere mehr als 10 bar, beträgt. Für den Brennstoffvorwärmer wird während des Stillstandes der Anlage Speisewasser mit einer Temperatur von bevorzugt 140 bis 210 °C, insbesondere im Bereich von 160 bis 190 °C, zur Verfügung gestellt.

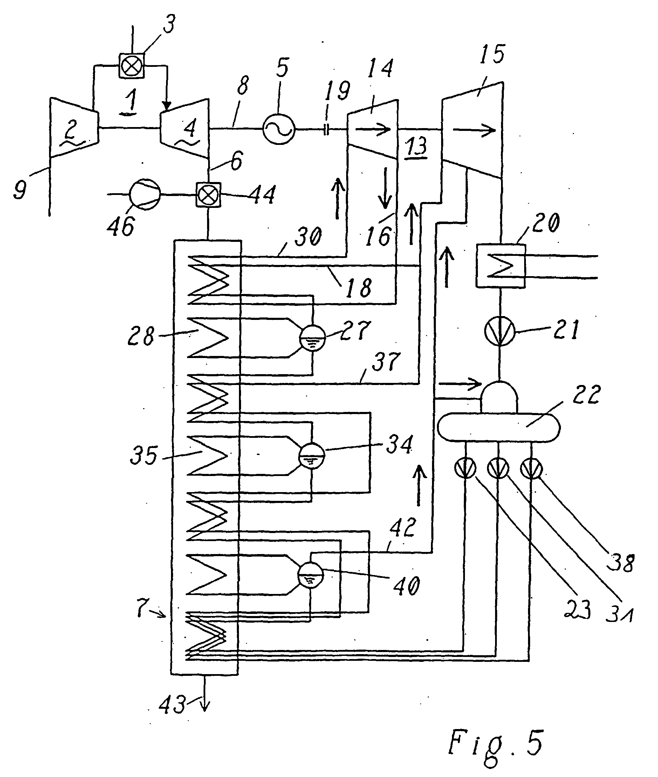

Figur 5 verdeutlicht die Möglichkeit, im Stillstand des Kombikraftwerks dickwandige Anlagenteile des Zweiphasenkreislaufs warmzuhalten, sowie entgastes Speisewasser bereitzustellen. Die hierzu am besten geeignete Zusatzfeuerung 44 mit Frischlüfter 46 befindet sich stromauf vom Abhitzekessel 7. Die Anordnung der Zusatzfeuerung 44 abgasseitig vor dem Abhitzekessel 7 stellt sicher, dass bei Betrieb der Zusatzfeuerung 44 der gesamte Abhitzekessel 7 warm gehalten wird. Mit Pfeilen sind Medienströme von durch die Zusatzfeuerung 44 vorgewärmtem Dampf oder Flüssigkeit angedeutet, welche im Anlagenstillstand zur Bereitschaftshaltung durch die Speise- und Förderpumpen gefördert werden. Dampf strömt über die Hochdruckfrischdampfleitung 30 zur Hochdruckdampfturbine 14, und durch diese hindurch über die kalte Zwischenüberhitzerdampfleitung 16 zurück in den Abhitzekessel 7. Dort wird der Dampf nochmals erwärmt und dann über die heisse Zwischenüberhitzerdampfleitung 18 der Mitteldruck-/Niederdruckdampfturbine 15 zugeführt. Ebenso strömt über die Niederdruckfrischdampfleitung 42 Dampf in die Mitteldruck-/Niederdruckdampfturbine 15. Dabei werden die durchströmten Komponenten warm gehalten, was insbesondere für die dickwandigen Bauteile bezüglich des schnellen Anfahrens von grosser Wichtigkeit ist. Dickwandige Bauteile wie Dampferzeugertrommeln aber auch Rohrleitungen und Rotoren/Gehäuse von Dampfturbinenanlagen sind häufig die begrenzenden Bauteile hinsichtlich des Temperaturaufbaus während des Anfahrens einer Kraftwerksanlage. Sie bedingen die obenerwähnten Haltepunkte, welche es zu vermeiden gilt. Die Warmhaltung durch geringe Durchströmung mit Wasser bzw. Dampf kann ein Absinken der Temperatur unter bestimmte Grenzwerte, welche sich je nach Komponente im Bereich zwischen 100 bis 400 °C bewegen, verhindern, und so geeignete Startbedingungen schaffen und halten. Als Faustregel kann eine Kraftwerksanlage umso schneller angefahren werden, je höher die Ausgangstemperaturen sind. Erfindungsgemäss werden die Zusatzfeuerung 44 und die Pumpen während des Stillstandes der Anlage kontinuierlich oder intermittierend so betrieben, dass die warm zu haltenden Anlagenteile auf einer Temperatur von mindestens 150 °C, insbesondere bevorzugt auf einer Temperatur von 250 bis 400 °C gehalten werden. Die Entgasung des Speisewassers eines Kombikraftwerkes erfolgt in einem Entgaser auf einem Druck- bzw. Temperaturniveau bis maximal 3 bar bzw. 130 °C. Daher ist eine Versorgung des Entgasers, welcher sich üblicherweise auf dem Speisewasserbehälter befindet, mit Niederdruckdampf völlig ausreichend. Über eine Abzweigung der Niederdruckfrischdampfleitung 42 wird der Speisewasserbehälter/Entgaser 22 während des Stillstandes des Kraftwerkes in Betrieb gehalten, so dass für ein schnelles Anfahren in ausreichendem Masse entgastes Speisewasser zur Verfügung steht. Dabei wird mittels der Zusatzfeuerung Dampf mit einem Druck von 2 bis 8 bar, insbesondere bevorzugt von 4 bis 6 bar, für die Entgasung erzeugt, dergestalt, dass im Stillstand des Kombikraftwerks ein Vorrat an entgastem Speisewasser bereitgestellt und bereitgehalten wird, was eine schnelle Inbetriebnahme des Zweiphasenkreislaufs ermöglicht.

Weiterhin kann die Zusatzfeuerung auch betrieben werden, um beispielsweise nicht dargestellte Kühlwasserleitungen des Kondensators vor dem Einfrieren zu schützen. Auch kann mittels einer im Stillstand gemäss der Erfindung erzeugten Heizmittelmenge die Temperatur von Schmieröl und/oder von Lagerstellen der Gasturbogruppe 1 und der Dampfturbine 13 oberhalb einer bestimmten Temperatur gehalten werden, so, dass die Fliessfähigkeit des Schmierstoffs bei einem Start auch nach längerem Stillstand und bei sehr niedrigen Aussentemperaturen von Anfang an gewährleistet wird, und beim Start der Lagerverschleiss gering gehalten wird. Die hierzu notwendigen Wärmetauscher und Leitungssysteme sind in der Zeichnung nicht dargestellt, sind dem Fachmann aber ohne weiteres geläufig. Auf vollkommen analoge Weise kann auch die Funktionsfähigkeit von Hydrauliksystemen während des Stillstandes durch Warmhaltung der Hydraulikflüssigkeit aufrechterhalten werden. Eine mittels der Zusatzfeuerung bei Anlagenstillstand erzeugte Dampf- oder Heisswassermenge kann auch verwendet werden, um im eigentlichen Anlagenstillstand einen für Heiz- oder Prozesszwecke benötigten externen Bedarf zu stillen, beispielsweise die Beheizung von zum Kraftwerkskomplex gehörigen Gebäuden wie Werkstätten und Büroräumen, ohne spezielle Reservesysteme vorzusehen.

### BEZUGSZEICHENLISTE

- 1: Gasturbogruppe
- 2: Verdichter
- 3: Brennkammer
- 4: Turbine
- 5: Generator
- 6: Abgas, Abgasleitung
- 7: Abhitzekessel
- 8: Welle
- 9: Ansaugluftleitung
- 10: Verbrennungsluft
- 11: Brennstoffleitung
- 12: gespanntes Heissgas
- 13: Dampfturbine
- 14: Hochdruckturbine
- 15: Mitteldruck-/Niederdruckturbine
- 16: Kalte Zwischenüberhitzerdampfleitung
- 17: Zwischenüberhitzer
- 18: Heisse Zwischenüberhitzerdampfleitung
- 19: Kupplung
- 20: Kondensator
- 21: Kondensatpumpe
- 22: Speisewasserbehälter/Entgaser
- 23: Hochdruckspeisepumpe
- 24: erster Hochdruckeconomizer
- 25: zweiter Hochdruckeconomizer
- 26: dritter Hochdruckeconomizer
- 27: Hochdruckdampftrommel
- 28: Hochdruckverdampfer
- 29: Hochdrucküberhitzer
- 30: Hochdruck-Frischdampfleitung
- 31: Mitteldruckspeisewasserpumpe
- 32: erster Mitteldruckeconomizer
- 33: zweiter Mitteldruckeconomizer
- 34: Mitteldruckdampftrommel
- 35: Mitteldruckverdampfer
- 36: Mitteldrucküberhitzer
- 37: Mitteldruck-Frischdampfleitung
- 38: Niederdruckspeisewasserpumpe
- 39: Niederdruckeconomizer
- 40: Niederdruckdampftrommel
- 41: Niederdruckverdampfer
- 42: Niederdruck-Frischdampfleitung
- 43: Kamin
- 44: Zusatzfeuerung
- 44a: Zusatzfeuerung
- 45: Brennstoffleitung
- 46: Frischlüfter
- 46a: Frischlüfter
- 47: Einspritzdampfleitung
- 48: Kühldampfzuleitung
- 49: Kühldampfrückleitung
- 50: Treibdampfleitung, Treibdampfstrom
- 51: Heizmedium für Brennstoffvorwärmer
- 52: Brennstoffvorwärmer
- 53: Evakuierungsejektor
- 54: Sperrdampfleitung
- 55: Sperrdampfabführung

## Patentansprüche

1. Verfahren zur Bereitschafthaltung eines Kombikraftwerkes bestehend aus wenigstens einer Gasturbogruppe (1), wenigstens einem von deren Abgas durchströmten Abhitzekessel (7) und wenigstens einer mit dem Dampf des Abhitzekessels (7) betriebenen Dampfturbine (13), wobei für den Abhitzekessel (7) wenigstens eine Zusatzfeuerung (44, 44a) mit wenigstens einem Frischlüfter (46, 46a) angeordnet ist, **dadurch gekennzeichnet, dass** die Zusatzfeuerung (44, 44a) zur Einstellung und/oder Einhaltung vorgegebener Zustände und Medienströme in dem aus Abhitzekessel (7) und Dampfturbine (13) bestehenden Zweiphasenkreislauf im Stillstand des Kraftwerks dauerhaft oder intermittierend betrieben wird.

2. Verfahren nach Anspruch 1, **dadurch gekennzeichnet, dass** während des Stillstandes dauerhaft oder intermittierend Förder- und/oder Speisepumpen (21, 23, 31, 38) des Zweiphasenkreislauf betrieben werden.

3. Verfahren nach Anspruch 1, **dadurch gekennzeichnet, dass** durch den Betrieb der Zusatzfeuerung (44, 44a) die Temperatur von im Zweiphasenkreislauf geführtem Medium oberhalb des Gefrierpunktes gehalten wird.

4. Verfahren nach einem der vorstehenden Ansprüche, **dadurch gekennzeichnet, dass** mittels der Zusatzfeuerung (44, 44a) eine zum Betrieb der Sperrdampf- und Sperrvakuumsysteme (54) geeignete Dampfmenge erzeugt wird.

5. Verfahren nach einem der vorstehenden Anspruche, **dadurch gekennzeichnet, dass** mittels der Zusatzfeuerung Kesselparameter, insbesondere Drücke und Temperaturen, eingestellt werden, die geeignet sind, um in den Dampfsystemen Überdruck zu gewährleisten.

6. Verfahren nach einem der vorstehenden Ansprüche, **dadurch gekennzeichnet, dass** mittels der Zusatzfeuerung die Temperatur der in Kühlsystemen des Kraftwerks enthaltenen Medien oberhalb des Gefrierpunktes gehalten wird.

7. Verfahren nach einem der vorstehenden Ansprüche, **dadurch gekennzeichnet, dass** die Zusatzfeuerung (44, 44a) betrieben wird, um mittels einer Heizflüssigkeits-, insbesondere Heizwassermenge, und/oder einer Dampfmenge die Temperatur von Komponenten (14, 15) des Zweiphasenkreislaufes oberhalb einer vorgegebenen Mindesttemperatur einzustellen.

8. Verfahren nach Anspruch 7, **dadurch gekennzeichnet, dass** bei der Komponentenvorwärmung die Temperatur des Frischdampfflansches der Dampfturbine (13) geregelt wird.

9. Verfahren nach einem der vorstehenden Ansprüche, **dadurch gekennzeichnet, dass** mittels der Zusatzfeuerung die Temperatur von Behältern (22, 27, 34, 40) des Zweiphasenkreislaufes oberhalb einer mindesterforderlichen Temperatur gehalten wird.

10. Verfahren nach einem der vorstehenden Ansprüche, **dadurch gekennzeichnet, dass** die Zusatzfeuerung zur Erzeugung einer zur Bereitstellung eines entgasten Speiseflüssigkeits-, insbesondere Speisewasservorrats, zur Entgasung erforderlichen Dampf- oder Heizflüssigkeitsmenge betrieben wird.

11. Verfahren nach einem der vorstehenden Ansprüche, **dadurch gekennzeichnet, dass** die Zusatzfeuerung zur Erzeugung einer für den Betrieb des Evakuierungsejektors (53) eines Kondensators des Zweiphasenkreislaufes erforderlichen Treibdampfmenge (50) betrieben wird.

12. Verfahren nach einem der vorstehenden Ansprüche, **dadurch gekennzeichnet, dass** die Zusatzfeuerung zur Bereitstellung einer für Dampfkühlung (48) und/oder Dampfeinspritzung (47) der Gasturbogruppe zu verwendenden Dampfes betrieben wird.

13. Verfahren nach einem der vorstehenden Ansprüche, **dadurch gekennzeichnet, dass** die Zusatzfeuerung zur Vorwärmung des Schmieröls der Dampfturbine (13) und/oder der Gasturbogruppe (1) verwendet wird.

14. Verfahren nach einem der vorstehenden Ansprüche, **dadurch gekennzeichnet, dass** der Frischlüfter zur weiteren Erhöhung der Startgeschwindigkeit zum Spülen von Abhitzekessel (7) und Kamin (43) betrieben wird.

## Claims

1. Method for maintaining a combined-cycle power station at readiness, with this combined-cycle power station comprising at least one gas turbine set (1), at least one waste-heat boiler (7) through which the exhaust gas from the gas turbine set (1) flows, and at least one steam turbine (13) which is driven by the steam from the waste-heat boiler (7), with at least one additional burner (44, 44a) with at least one fresh air supply (46, 46a) being arranged for the waste-heat boiler (7), **characterized in that** the additional burner (44, 44a) is operated in order to set and/or to maintain predetermined states and media flows continuously or intermittently in the two-phase circuit, which comprises the waste-heat boiler (7) and the steam turbine (13), when the power station is not in use.

2. Method according to claim 1, **characterized in that** feed and/or supply pumps (21, 23, 31, 38) in the two-phase circuit are operated continuously or intermittently while the power station is not in use.

3. Method according to claim 1, **characterized in that** the operation of the additional burner (44, 44a) maintains the temperature of the medium which is carried in the two-phase circuit above its freezing point.

4. Method according to one of the preceding claims, **characterized in that** an amount of steam which is suitable for operating the barrier steam and barrier vacuum systems (54) is produced by means of the additional burner (44, 44a).

5. Method according to one of the preceding claims, **characterized in that** boiler parameters, in particular pressures and temperatures, which are suitable to ensure an increased pressure in the steam systems are set by means of the additional burner.

6. Method according to one of the preceding claims, **characterized in that** the temperature of the media which are contained in the cooling systems for the power station are maintained above their freezing point by means of the additional burner.

7. Method according to one of the preceding claims, **characterized in that** the additional burner (44, 44a) is operated in order to set the temperature of components (14, 15) of the two-phase circuit above a predetermined minimum temperature by means of an amount of heating liquid, in particular an amount of heating water, and/or an amount of steam.

8. Method according to claim 7, **characterized in that** the temperature of the fresh steam flange of the steam turbine (13) is controlled during the component reheating process.

9. Method according to one of the preceding claims, **characterized in that** the temperature of containers (22, 27, 34, 40) in the two-phase circuit, is kept above a minimum required temperature by means of the additional burner.

10. Method according to one of the preceding claims, **characterized in that** the additional burner is operated in order to produce an amount of steam or heating liquid that is required to provide a supply of degassed supply liquid, in particular a supply of supply water, for degassing.

11. Method according to one of the preceding claims, **characterized in that** the additional burner is operated in order to produce an amount of driving steam (50) which is required for operation of the evacuation injector (53) for a condenser in the two-phase circuit.

12. Method according to one of the preceding claims, **characterized in that** the additional burner is operated in order to provide steam which can be used for steam cooling (48) and/or for steam injection (47) for the gas turbine set.

13. Method according to one of the preceding claims **characterized in that** the additional burner is used for preheating the lubricating oil for the steam turbine (13) and/or for the gas turbine set (1).

14. Method according to one of the preceding claims, **characterized in that** the fresh air supply is operated in order to further increase the starting rate for purging the waste-heat boiler (7) and the chimney (43).

## Revendications

1. Procédé de mise en attente d'une centrale électrique combinée constituée d'au moins un groupe générateur à turbines à gaz (1), d'au moins une chaudière à chaleur perdue (7) parcourue par ses gaz d'échappement et d'au moins une turbine à vapeur (13) entraînée par la vapeur de la chaudière à chaleur perdue (7), au moins un foyer supplémentaire (44, 44a) avec au moins un ventilateur d'air frais (46, 46a) étant prévu pour la chaudière à chaleur perdue (7), **caractérisé en ce que** le foyer supplémentaire (44, 44a) est utilisé de manière continue ou intermittente pour ajuster et/ou conserver des états prédéfinis et des courants de fluide dans le circuit à deux phases constitué de la chaudière à chaleur perdue (7) et de la turbine à vapeur (13) lors de l'arrêt de la centrale.

2. Procédé selon la revendication 1, **caractérisé en ce que** pendant l'arrêt, des pompes de refoulement et/ou d'alimentation (21, 23, 31, 38) du circuit à deux phases fonctionnent de manière continue ou intermittente.

3. Procédé selon la revendication 1, **caractérisé en ce que** le fonctionnement du foyer supplémentaire (44, 44a) permet de maintenir la température du fluide acheminé dans le circuit à deux phases au-dessus du point de congélation.

4. Procédé selon l'une quelconque des revendications précédentes, **caractérisé en ce que** le fonctionnement du foyer supplémentaire (44, 44a) permet de produire une quantité de vapeur appropriée pour le fonctionnement des systèmes de vapeur barrière et de vide barrière (54).

5. Procédé selon l'une quelconque des revendications précédentes, **caractérisé en ce que** le foyer supplémentaire permet d'ajuster des paramètres de la chaudière, notamment des pressions et des températures, qui sont appropriés pour assurer une surpression dans les systèmes de vapeur.

6. Procédé selon l'une quelconque des revendications précédentes, **caractérisé en ce que** le foyer supplémentaire permet de maintenir la température des fluides contenus dans les systèmes de refroidissement de la centrale au-dessus du point de congélation.

7. Procédé selon l'une quelconque des revendications précédentes, **caractérisé en ce que** le foyer supplémentaire (44, 44a) est utilisé pour ajuster, au moyen d'une quantité de liquide de chauffage, notamment d'une quantité d'eau de chauffage, et/ou d'une quantité de vapeur, la température de composants (14, 15) du circuit à deux phases au-dessus d'une température minimale prédéfinie.

8. Procédé selon la revendication 7, **caractérisé en ce qu'**au cours du préchauffage des composants, la température de la bride de vapeur fraîche de la turbine à vapeur (13) est régulée.

9. Procédé selon l'une quelconque des revendications précédentes, **caractérisé en ce que** le foyer supplémentaire permet de maintenir la température de récipients (22, 27, 34, 40) du circuit à deux phases au-dessus d'une température requise minimale.

10. Procédé selon l'une quelconque des revendications précédentes, **caractérisé en ce que** le foyer supplémentaire est utilisé pour produire une quantité de liquide de chauffage ou de vapeur nécessaire au dégazage, pour fournir une réserve de liquide d'alimentation dégazé, notamment une réserve d'eau d'alimentation.

11. Procédé selon l'une quelconque des revendications précédentes, **caractérisé en ce que** le foyer supplémentaire est utilisé pour produire une quantité de vapeur propulsive (50) requise pour le fonctionnement de l'éjecteur d'évacuation (53) d'un condenseur du circuit à deux phases.

12. Procédé selon l'une quelconque des revendications précédentes, **caractérisé en ce que** le foyer supplémentaire est utilisé pour fournir une vapeur à utiliser pour le refroidissement de vapeur (48) et/ou l'injection de vapeur (47) du groupe générateur à turbines à gaz.

13. Procédé selon l'une quelconque des revendications précédentes, **caractérisé en ce que** le foyer supplémentaire est utilisé pour le préchauffage de l'huile de lubrification de la turbine à vapeur (13) et/ou du groupe générateur à turbines à gaz (1).

14. Procédé selon l'une quelconque des revendications précédentes, **caractérisé en ce que** le ventilateur d'air frais est utilisé pour accroître la vitesse de départ pour rincer la chaudière à chaleur perdue (7) et la cheminée (43).
